# EUROPEAN PATENT APPLICATION

(11) **EP 4 807 420 A1**
(43) Date of publication of application: **16.09.2026**
(21) Application number: 26164262.3
(22) Date of filing: 12.03.2026
(51) Int. Cl.: G02B 6/44

(54) **CABLE DUCT CLAMP AND ENCLOSURE**

(30) Priority: 14.03.2025 US 202563771815 P; 04.12.2025 US 202519408862
(71) Applicant: AFL Telecommunications LLC, Duncan, SC 29334 (US)
(72) Inventor: PETERSEN, Mark, Duncan, SC 29334 (US)
(74) Representative: Serjeants LLP

(57) **Abstract**

A cable duct clamp (60) includes a body (70) forming an insert passage extending along an axial direction from a first opening (74) to a second opening. The body (70) includes an internal thread positioned proximate to the first opening (74), and a cross sectional area at the insert passage converging along the axial direction toward the second opening. An insert (80) forming a cable passage extends along the axial direction from a first end (84) to a second end. The insert (80) includes a pair or more of slots extending along the axial direction from the second end toward the first end (84). The insert (80) includes an external thread configured to thread with the internal thread of the body (70). The insert (80) at the cable passage includes a gripping interface configured to attach to a fiber optic cable (20).

## Description

### PRIORITY STATEMENT

The present disclosure claims the benefit of priority to U.S. provisional patent application no. 63/771,815, titled "INTERNAL CABINET DUCT CLAMPING WITH ANTI-ROLL", filed March 14, 2025, the disclosure of which is incorporated by reference herein in its entirety.

### FIELD

The present disclosure relates generally to modular panels for use in high density data centers.

### BACKGROUND

Enclosures are utilized in the telecommunications field for various transitions. Cables, such as fiber optic cable or electric cables, enter and exit the enclosure, in many cases through ducts in the enclosure. The duct must be held in place to prevent the cable and, for example, the fibers therein, from twisting and becoming entangled in the enclosure. The ducts must not be able to be pulled out from the enclosure.

Improved apparatuses for securing cables to telecommunications enclosure ports, such as fiber optic cables or electric cables, are desired in the art. Specifically, apparatuses which address one or more of the above-stated deficiencies would be advantageous.

### BRIEF DESCRIPTION

Aspects and advantages of the invention will be set forth in part in the following description, or may be obvious from the description, or may be learned through practice of the invention.

An aspect of the present disclosure is directed to a fiber optic enclosure having a plurality of walls forming an opening and an internal volume into which a cable is extendable. A mount bracket is positioned in the internal volume. A clamp includes a body receivable at the mount bracket and forming an insert passage extending along an axial direction from a first opening to a second opening. The body includes an internal thread positioned proximate to the first opening in the insert passage. The body includes a cross sectional area at the insert passage converging along the axial direction toward the second opening. An insert forming a cable passage extends along the axial direction from a first end to a second end. The insert includes a pair or more of slots extending along the axial direction from the second end toward the first end. The insert includes an external thread configured to thread with the internal thread of the body. The insert at the cable passage includes a gripping interface configured to attach to the fiber optic cable.

The mount bracket may comprise an opening at which an anti-rotation interface of the body is receivable. The opening and the anti-rotation interface of the body may each comprise corresponding flat faces.

An external surface of the body from the anti-rotation interface along the axial direction toward the first opening may comprise a greater cross-sectional area than the opening of the mount bracket.

The cable may be extendable through the insert passage of the body and the cable passage of the insert. The gripping interface of the insert may directly contact the cable when the external thread of the insert is received at the internal thread of the body.

The converging cross sectional area of the insert passage of the body may compresses a member of the insert formed between a pair or more of slots extending along the axial direction from the second end of the insert. The converging cross sectional area of the insert passage may compress the gripping interface of the insert onto the cable.

The insert may comprise a member formed between the pair or more of slots extending along the axial direction from the second end of the insert.

The member may comprise an outwardly extending flare at the second end. The gripping interface may be positioned at the cable passage at the member.

The member may comprise a strain relief along an external surface extending from the second end.

The body and the insert each may comprise a flat face along respective external surfaces. The flat faces may be positioned proximate to the first opening when the external thread of the insert is mated to the internal thread of the body.

The body may form the insert passage converging along the axial direction such that the first opening may comprise a greater cross-sectional area than the second opening.

An aspect of the present disclosure is directed to a clamp for a telecommunications cable. The clamp includes a body forming an insert passage extending along an axial direction from a first opening to a second opening. The body includes an internal thread positioned proximate to the first opening in the insert passage. The body includes a cross sectional area at the insert passage converging along the axial direction toward the second opening. An insert forms a cable passage extending along the axial direction from a first end to a second end. The insert includes a pair or more of slots extending along the axial direction from the second end toward the first end. The insert includes an external thread configured to thread with the internal thread of the body. The insert at the cable passage includes a gripping interface configured to attach to the fiber optic cable.

The insert may comprise a member formed between the pair or more of slots. The member may extend along the axial direction from proximate to the external thread to the second end of the insert.

The member may comprise an outwardly extending flare along the axial direction to the second end.

The gripping interface may be positioned at the cable passage at the member.

The gripping interface may be positioned at the cable passage at the flare of the member.

The member may comprise a strain relief configuration along an external surface extending from the second end.

The body may comprise a flat face along an external surface of the body.

The flat face may be positioned proximate to the first opening.

An anti-rotation interface may be positioned proximate to the second opening.

The insert may comprise a flat face along an external surface. The flat face of the insert may be positioned more proximate along the axial direction than the external thread to the first end.

The body may form the insert passage converging along the axial direction such that the first opening may comprise a greater cross-sectional area than the second opening.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
Fig. 1A provides a perspective view of an exemplary embodiment of a portion of an enclosure, and an exemplary embodiment of a cable duct clamp, in accordance with aspects of the present disclosure.
Fig. 1B provides a perspective view of an exemplary embodiment of a portion of an enclosure into which a cable is routed, and an exemplary embodiment of a cable duct clamp, in accordance with aspects of the present disclosure.
Fig. 2 provides a perspective view of an exemplary embodiment of a cable duct clamp in an unassembled state in accordance with aspects of the present disclosure.
Fig. 3 provides a cutaway side view of an exemplary embodiment of the cable duct clamp in the unassembled state in accordance with aspects of the present disclosure.
Fig. 4 provides a side view of an exemplary embodiment of the cable duct clamp in the unassembled state in accordance with aspects of the present disclosure.
Fig. 5 provides an end view of an exemplary embodiment of the cable duct clamp in an assembled state in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. The terms "includes" and "including" are intended to be inclusive in a manner similar to the term "comprising." Similarly, the term "or" is generally intended to be inclusive (i.e., "A or B" is intended to mean "A or B or both"). In addition, here and throughout the specification and claims, range limitations may be combined and/or interchanged. Such ranges are identified and include all the sub-ranges contained therein unless context or language indicates otherwise. For example, all ranges disclosed herein are inclusive of the endpoints, and the endpoints are independently combinable with each other. The singular forms "a," "an," and "the" include plural references unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "generally," "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin, i.e., including values within ten percent greater or less than the stated value. In this regard, for example, when used in the context of an angle or direction, such terms include within ten degrees greater or less than the stated angle or direction, e.g., "generally vertical" includes forming an angle of up to ten degrees in any direction, e.g., clockwise or counterclockwise, with the vertical direction V.

The word "exemplary" is used herein to mean "serving as an example, instance, or illustration." In addition, references to "an embodiment" or "one embodiment" does not necessarily refer to the same embodiment, although it may. Any implementation described herein as "exemplary" or "an embodiment" is not necessarily to be construed as preferred or advantageous over other implementations. Moreover, each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

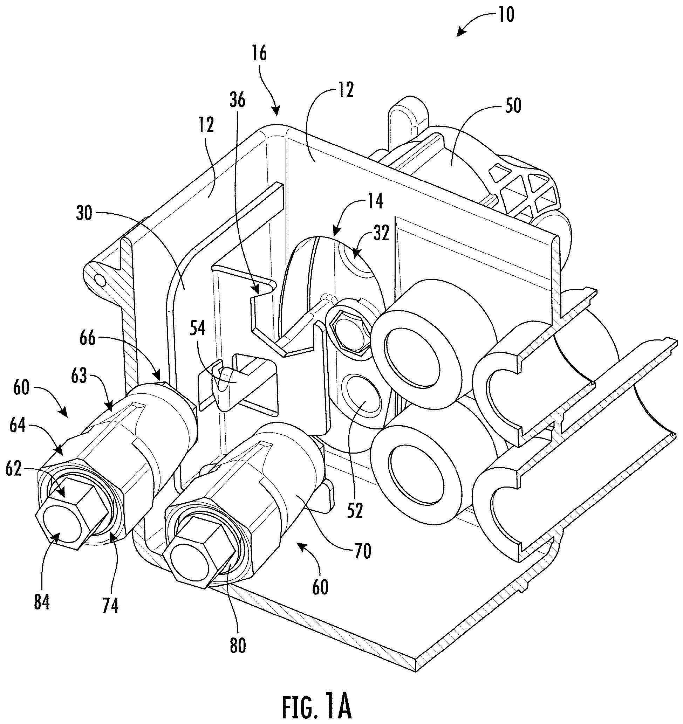

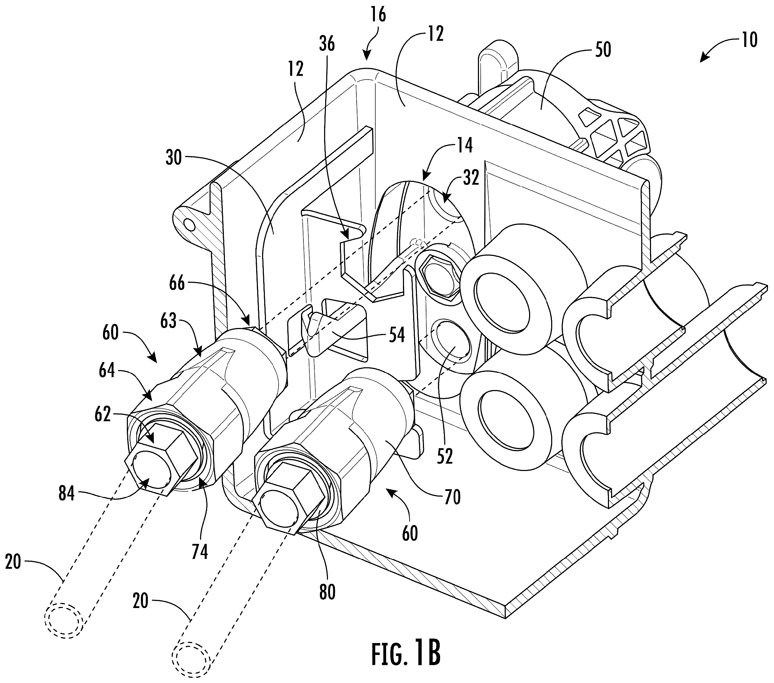

Referring now to the drawings, Figs. 1A-1B provide cutaway perspective views of an exemplary embodiment a telecommunications or fiber optic enclosure 10. The enclosure 10 includes a plurality of walls 12 forming an opening 14 and an internal volume 16 into which a cable 20 (Fig. 1B) is extendable. A mount bracket 30 is positioned in the internal volume 16 and configured to support the cable 20.

In various embodiments, the enclosure 10 includes a port apparatus 50 through which the cable 20 is extended. The port apparatus 50 may be configured to receive the cable 20 and provide fluid sealing around the cable 20, such as may mitigate flow of water, air, debris, particulate matter, or other undesired elements from entering the internal volume 16 of the enclosure 10. The port apparatus 50 may include a structure removable from the plurality of walls 12 and opening 14, such as may facilitate a user to selectively attach and detach the cable 20 from the port apparatus 50 and selectively ingress and egress the cable 20 through one or more ports 52 and through the opening 14 to the internal volume 16. In some embodiments, the mount bracket 30 may provide an interface at which a hook or latch 54 of the port apparatus 50 may couple in the internal volume 16 to the enclosure 10.

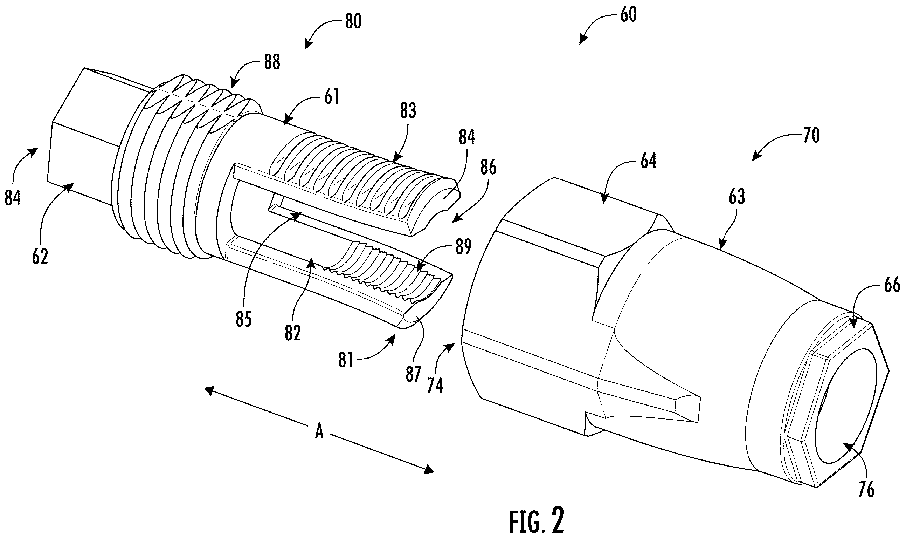

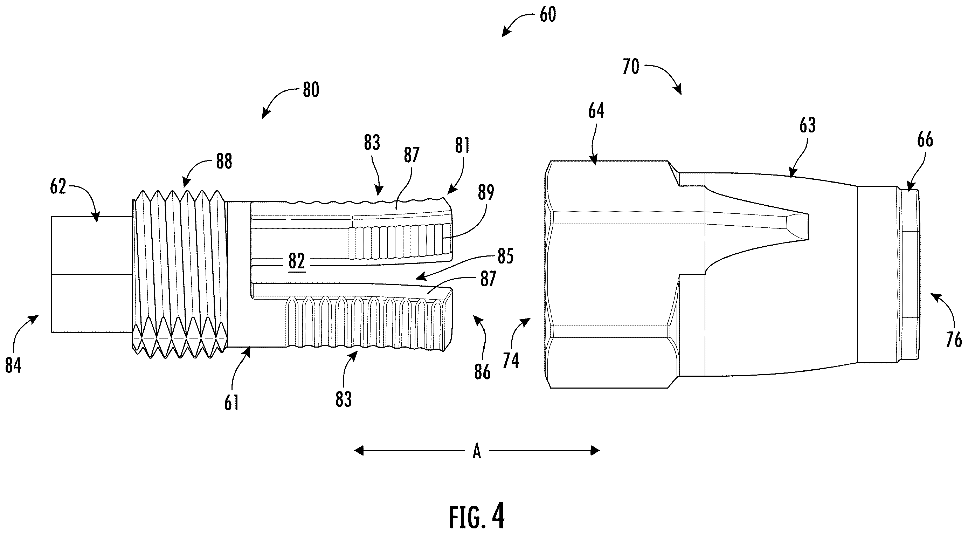

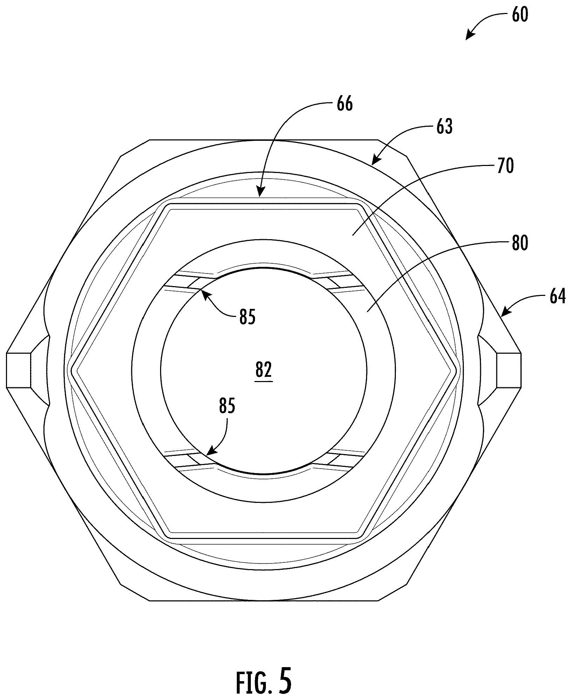

A telecommunications or fiber optic cable clamp 60 is provided that may promote securing or affixing the cable 20 to the enclosure 10, such as within the internal volume 16. Figs. 1A-1B provide a view of clamp 60A unattached to the mount bracket 30, and clamp 60B attached to the mount bracket 30. Figs. 2-4 provide views of the clamp 60 in an unassembled state. Fig. 5 provides an axial end view from second opening 76 or second end 86 of the clamp 60 in an assembled state.

The clamp 60 may prevent the cable 20 from being undesirably pulled out of the enclosure 10. Embodiments of the clamp 60 further depicted and described herein may mitigate undesired twisting of the cable 20 and cable fibers once in the enclosure 10. Embodiments of the clamp 60 may furthermore promote ease of installation, such as may permit hand-tightening to secure the cable 20 to the enclosure 10. Embodiments of the clamp 60 may provide a toolless structure for securing the cable to the enclosure, preventing cable pull out, and mitigating cable and fiber twisting.

Referring to Figs. 1A-1B, and in further detail to Figs. 2-5, the clamp 60 includes a body 70 forming an insert passage 72 extending along an axial direction A from a first opening 74 to a second opening 76. The body 70 includes an internal thread 78 positioned proximate to the first opening 74 in the insert passage 72. For instance, the internal thread 78 may be positioned more proximate to the first opening 74 than to the second opening 76. The body 70 includes a cross sectional area 71 at the insert passage 72 converging, such as depicted at converging inner surface 73 of the insert passage 72, along the axial direction A toward the second opening 76.

The clamp 60 includes an insert 80 forming a cable passage 82 extending along the axial direction A from a first end 84 to a second end 86. The insert 80 includes a pair or more of slots 85 extending along the axial direction A from the second end 86 toward the first end 84. The insert 80 includes an external thread 88 configured to thread with the internal thread 78 of the body 70. The insert 80 includes a gripping interface 89 at the cable passage 82.

The gripping interface 89 is configured to attach to the cable 20. In various embodiments, the gripping interface 89 includes protrusions, ridges, spikes, teeth, bumps, or relatively rough surface textures promoting adhesion of the insert 80 onto the cable 20, such as into an outer jacket of the cable 20.

In various embodiments, the pair or more of slots 85 forms a member 87. The member 87 is formed between the pair or more of slots 85 such that the member extends substantially along the axial direction A from the second end 86 of the insert 80. The slot 85, and the member 87 formed between a pair of slots 85, extends along the axial direction A from the second end 86 toward the external thread 88 such that the member 87 extends proximately along the axial direction A to the external thread 88.

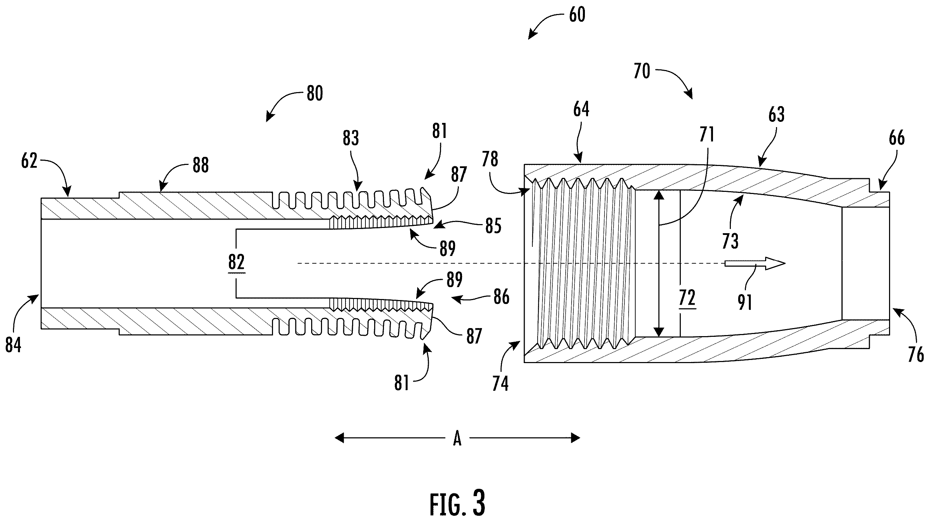

The member 87 forms a flexible or compliant structure permitting flexing or bending as the insert 80 contacts the converging inner surface 73 of the body 70. In an exemplary embodiment of use and assembly, the cable 20 is provided through the insert passage 72 and the cable passage 82. The second end 86 of the insert 80 is provided into the body 70 through the first opening 74 and translated along the axial direction A toward the second opening 76 (such as depicted along direction 91 in Fig. 3) until internal and external threads 78, 88 are joined. As the insert 80 is translated along the axial direction A through the insert passage 72, the converging inner surface 73 pushes the gripping interface 89 radially inward toward the cable 20 extended through the cable passage 82. The gripping interface 89 attaches to the cable 20, such as an outer jacket thereof. In the assembled state, such as depicted in Figs. 1A-1B, the first opening 74 and first end 84 are positioned proximate to one another and the second opening 76 and second end 86 are positioned proximate to one another.

Referring to Figs. 2-4, in various embodiments, the member 87 includes a radially outwardly extending flare 81 as the member 87 extends along the axial direction A toward the second end 86. As such, the member 87 at the second end 86 includes a radially divergent portion or flare 81. The gripping interface 89 positioned at the cable passage 82 at the member 87 may be positioned at the flare 81 such that the gripping interface 89 may avoid adhering to the cable 20 until the converging inner surface 73 of the body 70 pushes the flared 81 portion of the member 87 radially inward toward the cable 20. As such, routing and translation of the cable 20 axially through the cable passage 82 may be facilitated and uninhibited by attachment of the gripping interface 89 until the insert 80 is received in the body 70 and the converging inner surface 73 adheres the gripping interface 89 onto the cable 20. In still some embodiments, The clamp 60 may permit the gripping interface 89 to directly contact the cable 20 at the outer jacket, such as may remove a need for intermediate materials or surfaces between the cable and the clamp.

In various embodiments, the insert 80 may include a cable gland or strain relief 83 along an external surface 61 of the insert 80. The strain relief 83 extends along the axial direction A from the second end 86 of the insert 80. The strain relief 83 positioned at the member 87 may promote flexing, bending, or compression of the member 87 such as to facilitate adhering the gripping interface 89 onto the cable 20 as described.

In some embodiments, the body 70 forms the insert passage 72 converging along the axial direction A such that the first opening 74 forms a greater cross-sectional area than the second opening 76. The greater cross-sectional area of the first opening 74 may further permit receiving the flare 81 of the insert 80 at the second end 86 and through the insert passage 72 for contact with the converging inner surface 73 of the body 70. The greater cross-sectional area of the first opening 74 over the second opening 76 may further discourage or prevent inserting, or attempting insertion, of the first end 84 of the insert 80 through the second opening 76 of the body 70. As such, ease of installation may further be promoted.

In various embodiments, at least a portion of an external surfaces, 61, 63 of the insert 80 and body 70 may form substantially cylindrical, tubular, or round cross-sectional bodies.

In some embodiments, the insert 80 includes a flat face 62 along an external surface 61 of the insert 80. The flat face 62 is positioned at or proximate to the first end 84. For instance, the flat face 62 may be positioned more proximate to the first end 84 than the external thread 88. As such, the insert 80 may include an arrangement along the external surface 61 along the axial direction A, from the first end 84 to the second end 86, of the flat face 62, the external thread 88, and the member 87. Still further, the flare 81 may be positioned at or proximate to the second end 86 and distal to the flat face 62 and first end 84. As such, when provided into the body 70, the insert 80 may include the flat face 62 protruding along the axial direction A from the body 70, such as may provide a user interface to hold and articulate the insert 80.

In still some embodiments, the body 70 may include a flat face 64 along an external surface 63 of the body 70. The flat face 64 may be positioned at or proximate to the first opening 74. For instance, the flat face 64 may be positioned more proximate along the axial direction A to the first opening 74 than the second opening 76. The flat face 64 may provide a user interface to hold and articulate the body 70. For instance, in an exemplary embodiment of use and assembly, the body 70 may be rotated to secure the internal thread 78 onto the external thread 88 while maintaining the insert 80 and cable 20 stationary.

When the insert 80 is provided into the body 70, the flat faces 62, 64 may be positioned proximate to one another, such as in adjacent serial arrangement along the axial direction A. Flat faces 62, 64 may provide user interfaces promoting user grip at the body 70 and insert 80 for hand-tightening the body 70 onto the insert 80. In some embodiments, the flat faces 62, 64 may provide tooling interfaces facilitating use of a tool (e.g., a wrench) for tightening the body 70 onto the insert 80. Flat faces depicted and described herein may correspond to a hexagonal geometry, such as may correspond to a wrench, socket, or other tooling interface. However, it should be appreciated that various embodiments of the clamp provided herein may provide sufficient adhesion to the cable without requiring the use of a tool.

In some embodiments, the body 70 includes an anti-rotation interface 66 positioned at or proximate to the second opening 76. Referring back to Figs. 1A-1B, in some embodiments, the mount bracket 30 may include an opening 36 through which the cable 20 is extendable from the opening 14 into the internal volume 16 of the enclosure 10. The opening 36 at the mount bracket 30 and the anti-rotation interface 66 may each include corresponding flat faces at which the anti-rotation interface 66 of the body 70 is receivable to the mount bracket 30.

In still some embodiments, the external surface 63 of the body 70 from the anti-rotation interface 66 (e.g., from the axial end corresponding to the second opening 76) along the axial direction A toward the first opening 74 includes a greater cross-sectional area than the opening 36 of the mount bracket 30. The greater cross-sectional area along the external surface 63 may correspond to the greater cross-sectional area described at the first opening 74 relative to the second opening 76. The greater cross-sectional area along the external surface 63 of the body 70 may further inhibit pulling the clamp 60 through the opening 36 toward the opening 14 at the wall 12, such as may prevent undesired cable 20 and clamp 60 pull-through. As such, the flat faces forming the anti-rotation interface 66 and opening 36 may inhibit rotation of the clamp 60 and inhibit axial translation of the cable 20 and clamp 60 from the mount bracket 30 toward port apparatus 50.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A clamp (60) for a telecommunications cable, the clamp (60) comprising:
a body (70) forming an insert passage (72) extending along an axial direction (A) from a first opening (74) to a second opening (76), the body (70) comprising an internal thread (78) positioned proximate to the first opening (74) in the insert passage (72), the body (70) comprising a cross sectional area (71) at the insert passage (72) converging along the axial direction (A) toward the second opening (76); and
an insert (80) forming a cable passage (82) extending along the axial direction (A) from a first end (84) to a second end (86), the insert (80) comprising a pair or more of slots (85) extending along the axial direction (A) from the second end (86) toward the first end (84), the insert (80) comprising an external thread (88) configured to thread with the internal thread (78) of the body (70), wherein the insert (80) at the cable passage (82) comprises a gripping interface (89) configured to attach to the telecommunications cable (20).

2. A clamp (60) according to claim 1, wherein the insert (80) comprises a member (87) formed between the pair or more of slots (85), the member (87) extending along the axial direction (A) from proximate to the external thread (88) to the second end (86) of the insert (80).

3. A clamp (60) according to claim 2, wherein the member (87) comprises an outwardly extending flare (81) along the axial direction (A) to the second end (86), wherein the gripping interface (89) is optionally positioned at the cable passage (82) at the flare (81) of the member (87).

4. A clamp (60) according to claim 2 or claim 3, wherein the member (87) comprises a strain relief (83) along an external surface (61) of the insert (80) extending from the second end (86).

5. A clamp (60) according to any preceding claim, the body (70) comprising a flat face (64) along an external surface (63) of the body (70).

6. A clamp (60) according to claim 5, wherein the flat face (64) is positioned proximate to the first opening (74), and wherein an anti-rotation interface (66) is positioned proximate to the second opening (76).

7. A clamp (60) according to claim 5 or claim 6, the insert (80) comprising a flat face (62) along an external surface (61) of the insert (80), wherein the flat face (62) of the insert (60) is positioned more proximate along the axial direction (A) than the external thread (88) to the first end (84).

8. A clamp (60) according to any preceding claim, wherein the body (70) forms the insert passage (72) converging along the axial direction (A) such that the first opening (74) comprises a greater cross-sectional area than the second opening (76).

9. A fiber optic enclosure (10), the enclosure (10) comprising:
a plurality of walls (12) forming an opening (14) and an internal volume (16) into which a cable (20) is extendable;
a mount bracket (30) positioned in the internal volume (16); and
a clamp (60) according to claim 1, the body (70) of the clamp (60) being receivable at the mount bracket (30).

10. A fiber optic enclosure (10) according to claim 9, wherein the mount bracket (30) comprises an opening (36) at which an anti-rotation interface (66) of the body (70) is receivable, wherein the opening (36) at the mount bracket (30) and the anti-rotation interface (66) of the body (70) each comprise corresponding flat faces.

11. A fiber optic enclosure (10) according to claim 10, wherein an external surface (63) of the body (70) from the anti-rotation interface (66) along the axial direction (A) toward the first opening (74) comprises a greater cross-sectional area than the opening (36) of the mount bracket (30).

12. A fiber optic enclosure (10) according to any of claims 9 to 11, wherein the cable (20) is extendable through the insert passage (72) of the body (70) and the cable passage (82) of the insert (80), and wherein the gripping interface (89) of the insert (80) directly contacts the cable (20) when the external thread (88) of the insert (80) is received at the internal thread (78) of the body (70), optionally wherein the converging cross sectional area of the insert passage (72) of the body (70) compresses a member (87) of the insert (80) formed between a pair or more of slots (52) extending along the axial direction (A) from the second end (86) of the insert (80), optionally wherein converging cross sectional area of the insert passage (72) compresses the gripping interface (89) of the insert (80) onto the cable (20).

13. A fiber optic enclosure (10) according to any of claims 9 to 12, wherein the insert (80) comprises a member (87) formed between the pair or more of slots (85) extending along the axial direction (A) from the second end (86) of the insert (80), wherein the member (87) optionally comprises an outwardly extending flare (81) at the second end (86), and wherein the gripping interface (89) is optionally positioned at the cable passage (82) at the member (87), and/or wherein the member (87) optionally comprises a strain relief (83) along an external surface (61) of the insert (80) extending from the second end (86).

14. A fiber optic enclosure (10) according to any of claims 9 to 13, the body (70) and the insert (80) each comprising a flat face (62, 64) along respective external surfaces (61, 63), the flat faces (62, 64) positioned proximate to the first opening (74) when the external thread (88) of the insert (80) is mated to the internal thread (78) of the body (70).

15. A fiber optic enclosure (10) according to any of claims 9 to 14, wherein the body (70) forms the insert passage (72) converging along the axial direction (A) such that the first opening (74) comprises a greater cross-sectional area than the second opening (76).
